(19)

Europäisches
Patentamt
European
Patent Office
Office européen
des brevets

(11)    **EP 4 415 087 A1**

(12)    **EUROPEAN PATENT APPLICATION**
published in accordance with Art. 153(4) EPC

(43) Date of publication:
**14.08.2024  Bulletin 2024/33**

(21) Application number: **22926642.4**

(22) Date of filing: **31.05.2022**

(51) International Patent Classification (IPC):
**H01M 10/04** (2006.01)     **H01M 10/0587** (2010.01)

(52) Cooperative Patent Classification (CPC):
Y02T 10/70

(86) International application number:
**PCT/CN2022/096279**

(87) International publication number:
**WO 2023/155332 (24.08.2023 Gazette 2023/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **15.02.2022  CN 202210136025**

(71) Applicant: **Jiangsu Contemporary Amperex
Technology Limited
Liyang City, Changzhou City, Jiangsu 213300
(CN)**

(72) Inventors:
• **ZHANG, Xiaowei
Jiangsu 213300 (CN)**

• **WANG, Zhiwen
Jiangsu 213300 (CN)**
• **WU, Xiang
Jiangsu 213300 (CN)**
• **ZHANG, Wei
Jiangsu 213300 (CN)**
• **WEN, Yuqian
Jiangsu 213300 (CN)**
• **TANG, Minghao
Jiangsu 213300 (CN)**
• **ZHANG, Shengwu
Jiangsu 213300 (CN)**

(74) Representative: **Ran, Handong et al
Maucher Jenkins
Seventh Floor Offices
Artillery House
11-19 Artillery Row
London SW1P 1RT (GB)**

(54)    **WINDING DEVICE AND WINDING METHOD**

(57)     Embodiments of the present application relate to the technical field of electrode assembly winding, and in particular to a winding device and a winding method. The device comprises: a winding needle used for winding a coiled material, the winding needle comprising a magnetic portion, and the magnetic portion being disposed in the axis direction of the winding needle; and a magnetic supply assembly used for providing a magnetic field, the magnetic supply assembly being disposed correspondingly to the magnetic portion, and the magnetic field interacting with the magnetic portion to generate magnetic force so as to resist deformation of the winding needle. By means of the winding device, the deformation of the winding needle is reduced, and the risk that an electrode assembly is dislocated or wrinkled in a winding process is reduced.

FIG. 4

EP 4 415 087 A1

## Description

## CROSS-REFERENCE TO RELATED APPLICATIONS

This application claims priority to Chinese patent application No. 202210136025.9, filed on February 15, 2022 and entitled "WINDING DEVICE AND WINDING METHOD", which is incorporated herein by reference in its entirety.

## TECHNICAL FIELD

Embodiments of this application relate to the field of electrode assembly winding technologies and specifically to a winding device and a winding method.

## BACKGROUND

Energy saving and emission reduction are crucial to the sustainable development of the automobile industry. Electric vehicles, with their advantages in energy conservation and environmental protection, have become an important part of sustainable development of the automobile industry. For electric vehicles, battery technology is an important factor in connection with their development.

With the development of battery technology, the demand for batteries is growing increasingly, and how to quickly and efficiently produce and manufacture batteries that meet quality requirements has been increasingly important. The inventors of this application have found that in prior-art battery production technologies, a method of winding a roll material using a winding mandrel is typically used to form electrode assemblies during production of the electrode assemblies. When the roll material is being wound, the winding mandrel is subjected to tension from the roll material, so that the winding mandrel deforms, which in turn results in different degrees of deformation and wrinkles of electrode plates and insulators in batteries, thereby resulting in degraded performance of the electrode assembly and low winding efficiency of the electrode assembly.

## SUMMARY

In view of the foregoing problems, embodiments of this application provide a winding device and a winding method to solve the above problems in the prior art.

According to an aspect, an embodiment of this application provides a winding device. The winding device includes a winding mandrel and a magnetism supply assembly, where the winding mandrel is configured to wind a roll material, and the winding mandrel includes a magnetic portion, the magnetic portion being disposed along an axial direction of the winding mandrel; and the magnetism supply assembly is configured to provide a magnetic field, and the magnetism supply assembly is disposed in correspondence with the magnetic portion, where the magnetic field interacts with the magnetic portion to generate a magnetic force so as to resist deformation of the winding mandrel.

In this embodiment of this application, the magnetic portion is disposed on the winding mandrel, the magnetism supply assembly is configured to provide the magnetic field toward the magnetic portion, and the magnetic field interacts with the magnetic portion to generate the magnetic force so as to resist the deformation of the winding mandrel. In this way, the risk of displacement or wrinkles of electrode assemblies during winding is reduced, and detachment or fracture of the winding mandrel caused by deformation during winding is also avoided, so that the winding efficiency of the electrode assembly is improved, and the battery performance is improved. In addition, because the deformation amount of the winding mandrel is decreased, the winding device may use a winding mandrel with a smaller diameter and a larger length, which can further increase energy density of the battery.

In some embodiments, the magnetism supply assembly includes a regulation unit and an excitation coil, where the excitation coil is disposed in correspondence with the magnetic portion, the regulation unit is electrically connected to the excitation coil, and the regulation unit is configured to regulate current and/or voltage flowing through the excitation coil to regulate intensity of the magnetic field.

In these embodiments of this application, through the foregoing arrangement, the intensity of the magnetic field formed by the magnetism supply assembly can be regulated conveniently to regulate interaction forces between the magnetism supply assembly and the magnetic portion on the winding mandrel, improving convenience in regulation of the deformation of the winding mandrel.

In some embodiments, the magnetism supply assembly includes a monitoring unit and a control unit, where the monitoring unit is configured to obtain a deformation amount of the winding mandrel and send the deformation to the control unit; and the control unit is electrically connected to the regulation unit, and the control unit is configured to control the regulation unit based on the deformation amount so as to regulate the intensity of the magnetic field.

In these embodiments of this application, the deformation of the winding mandrel is monitored, and the intensity of the magnetic field generated by the excitation coil is regulated based on the deformation amount, which regulates interaction forces between the magnetic field of the excitation coil and the magnetic portion on the winding mandrel, thereby regulating the deformation of the winding mandrel such that the deformation can be kept within a small range.

In some embodiments, the monitoring unit is disposed opposite one or both ends of the winding mandrel. With such arrangement, the structure of the winding device is simplified, and the deformation of the winding mandrel can be obtained conveniently.

In some embodiments, multiple magnetic portions are spaced apart along the axial direction of the winding mandrel. The magnetism supply assembly includes multiple excitation coils, where the excitation coils are disposed opposite the magnetic portions in one-to-one correspondence.

In this way, the deformation at a specific position of the winding mandrel can be regulated more accurately, so that all positions of the winding mandrel can be stressed uniformly, and the winding mandrel has zero deformation or a deformation amount within an allowable range at all times.

In some embodiments, an annular groove is provided on a surface of the winding mandrel, and the magnetic portion is disposed in the annular groove. The magnetic portion being disposed in the annular groove can prevent the magnetism supply assembly from protruding from the surface of the winding mandrel and affecting the quality of the wound roll material.

In some embodiments, an outer side surface of the magnetic portion is flush with the surface of the winding mandrel. The outer side surface of the magnetic portion being flush with the surface of the winding mandrel can keep the surface of the winding mandrel in a smooth state, so that the winding mandrel is more easily pulled out of the roll material.

According to another aspect, an embodiment of this application further provides a winding method. The winding method includes: winding a roll material by using a winding mandrel, where a magnetic portion is disposed on the winding mandrel along an axial direction; and providing a magnetic field toward the winding mandrel, where the magnetic field interacts with the magnetic portion to generate a magnetic force so as to resist deformation of the winding mandrel.

In the winding method of this embodiment of this application, the magnetic field is provided toward the winding mandrel with the magnetic portion, and the magnetic field interacts with a magnetic field of the magnetic portion to generate the magnetic force so as to resist the deformation of the winding mandrel. In this way, the risk of displacement or wrinkles of electrode assemblies during winding is reduced, and detachment or fracture of the winding mandrel caused by deformation during winding is also avoided, so that the winding efficiency of the electrode assembly is improved, and the battery performance is improved. In addition, because the deformation of the winding mandrel is decreased, the winding device may use a winding mandrel with a smaller diameter and a larger length, which can further increase energy density of the battery.

In some embodiments, the method further includes: monitoring the winding mandrel and obtaining a deformation amount of the winding mandrel; and regulating intensity of the magnetic field based on the deformation amount. In this way, the deformation of the winding mandrel is obtained in a real-time manner, and the intensity of the magnetic field is regulated based on the deformation amount in a real-time manner, so that a magnetic force applied to the winding mandrel is regulated, which can keep the deformation of the winding mandrel within a small range during winding of the winding mandrel.

In some embodiments, the obtaining a deformation amount of the winding mandrel and regulating intensity of the magnetic field based on the deformation amount include: obtaining a displacement variation between a current position and an initial position of the winding mandrel; determining a maximum deflection deformation amount of the winding mandrel based on the displacement variation and a preset deflection deformation model; and regulating the intensity of the magnetic field under a condition of the maximum deflection deformation amount being greater than a preset threshold.

In these embodiments of this application, such method simplifies the operation of obtaining the deformation of the winding mandrel and improves the accuracy in obtaining the deformation of the winding mandrel. In addition, the intensity of the magnetic field is regulated only when the maximum deflection deformation amount is greater than the preset threshold, avoiding frequent regulation of the winding mandrel and improving the winding efficiency.

In some embodiments, multiple magnetic portions are spaced apart along the axial direction of the winding mandrel. The winding method further includes: providing magnetic fields toward the magnetic portions on the winding mandrel respectively; monitoring the winding mandrel and obtaining a deformation amount of the winding mandrel; and regulating intensities of the magnetic fields corresponding to the magnetic portions based on the deformation amount. In this way, the deformation at a specific position of the winding mandrel can be regulated more accurately, so that all positions of the winding mandrel can be stressed uniformly, and the winding mandrel has zero deformation or a deformation amount within an allowable range at all times.

In some embodiments, the method further includes: obtaining a displacement variation between a current position and an initial position of the winding mandrel; determining maximum deflection deformation amounts corresponding to positions of the magnetic portions on the winding mandrel based on the displacement variation and a preset deflection deformation model; and separately regulating intensities of the magnetic fields corresponding to the magnetic portions based on the maximum deflection deformation amounts corresponding to the positions of the magnetic portions and preset thresholds of the positions of the magnetic portions. In these embodiments of this application, such method improves the accuracy in obtaining the deformation of the winding mandrel. In addition, the intensity of the magnetic field is regulated only when the maximum deflection deformation amount is greater than the preset threshold, avoiding frequent regulation of the winding mandrel and improving the winding efficiency.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

## BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Throughout the accompanying drawings, the same reference signs represent the same components. In the accompanying drawings:

> FIG. 1 is a schematic structural diagram of a battery cell;
> FIG. 2 is a schematic diagram of winding of an electrode assembly;
> FIG. 3 is a schematic diagram of bending of a winding mandrel of a winding device for electrode assembly;
> FIG. 4 is a general structural diagram of a winding device according to an embodiment of this application;
> FIG. 5 is a schematic diagram of deflection deformation of a winding mandrel of a winding device according to an embodiment of this application;
> FIG. 6 is a structural diagram of a winding device according to another embodiment of this application;
> FIG. 7 is a locally enlarged view of a structure of a winding mandrel according to an embodiment of this application;
> FIG. 8 is a schematic flowchart of a winding method according to an embodiment of this application;
> FIG. 9 is a schematic flowchart of another winding method according to an embodiment of this application;
> FIG. 10 is a schematic flowchart of monitoring of a maximum deflection deformation amount according to an embodiment of this application; and
> FIG. 11 shows a simplified model for calculation of a maximum deflection deformation amount according to an embodiment of this application.

Reference signs in the specific embodiments are described as follows:

> battery cell 1000; electrode assembly 1100; first insulator 1110; first electrode plate 1120; second insulator 1130; second electrode plate 1140; housing 1200; end cover 1300;
> winding device 2000; driving mechanism 100; winding mandrel base 200; winding mandrel 300; magnetic portion 310; excitation coil 403; regulation unit 413; annular groove 311; magnetic coating 312; first magnetic portion 320; second magnetic portion 330; magnetism supply assembly 400; power supply 401; control unit 402; first excitation coil 404; first variable resistor 414; second excitation coil 405; second variable resistor 415; monitoring unit 406; and roll material 500.

## DETAILED DESCRIPTION OF EMBODIMENTS

The following describes in detail the embodiments of technical solutions in this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the technical terms "first", "second" and the like are merely intended to distinguish between different objects, and shall not be understood as any indication or implication of relative importance or any implicit indication of the number, particular sequence or primary-secondary relationship of the technical features indicated. In the description of the embodiments of this application, "a plurality of" means at least two unless otherwise specifically stated.

In this specification, reference to "embodiment" means that specific features, structures, or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of A, presence of both A and B, and presence of B.

In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for the ease and brevity of description of the embodiments of this application rather than indicating or implying that the apparatuses or components mentioned must have specific orientations or must be constructed or manipulated according to specific orientations, and therefore shall not be construed as any limitations on the embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

Currently, from the perspective of market development, application of batteries is being more extensive. Batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of batteries, market demands for batteries are also increasing.

With the development of battery technology, the demand for batteries is increasing, and how to quickly and efficiently produce and manufacture batteries that meet quality requirements is becoming more and more important. In the existing battery production technology, during winding of electrode assemblies, a winding mandrel deforms, which often results in low winding efficiency and low yield.

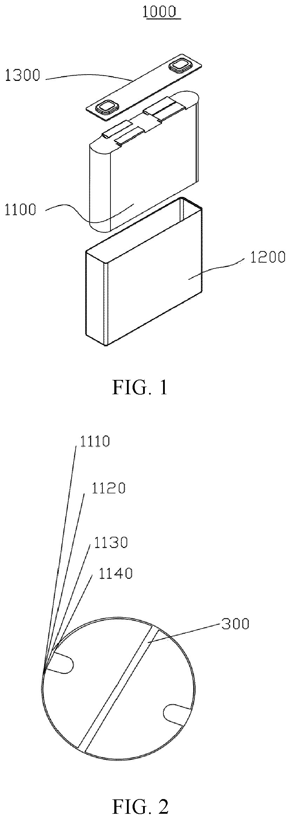

As shown in FIG. 1, a current battery cell 1000 mainly includes a housing 1200, an electrode assembly 1100, an end cover 1300, and other functional components, where the electrode assembly 1100 is disposed in the housing 1200, and the end cover 1300 is configured to cover an opening of the housing 1200 and dispose the electrode assembly 1100 in the housing 1200. The housing 1200 is an assembly configured to form an internal environment of the battery cell, where the formed internal environment may be configured to accommodate the electrode assembly, an electrolyte, and other components.

The end cover 1300 refers to a component that covers the opening of the housing 1200 to isolate an internal environment of the electrode assembly 1100 from an external environment. A shape of the end cover 1300 is not limited and may be adapted to a shape of the housing 1200 to fit the housing 1200. Optionally, the end cover 1300 may be made of a material with certain hardness and strength (for example, aluminum alloy), so that the end cover 1300 is less likely to deform when subjected to extrusion and collision, allowing the battery cell 1000 to have higher structural strength and enhanced safety performance. The end cover 1300 may also be made of various materials, such as copper, iron, aluminum, stainless steel, aluminum alloy, and plastic. This is not particularly limited in the embodiments of this application. In some embodiments, an insulator may also be disposed on an inner side of the end cover 1300. The insulator may be configured to isolate an electrically connected component in the housing 1200 from the end cover 1300 to reduce a risk of short circuit. For example, the insulator may be made of plastic, rubber, or the like.

The housing 1200 is an assembly configured to form an internal environment of the battery cell 1000 together with the end cover 1300, where the formed internal environment may be configured to accommodate the electrode assembly 1100, an electrolyte, and other components. The housing 1200 and the end cover 1300 may be separate components, an opening may be provided on the housing 1200, and the end cover 1300 covers the opening to form the internal environment of the battery cell 1000. The end cover 1300 and the housing 1200 are not limited and may also be integrated. Specifically, the end cover 1300 and the housing 1200 may form a shared connection surface before other components are disposed inside the housing, and then the housing 1200 is covered with the end cover 1300 when inside of the housing 1200 needs to be enclosed. The housing 1200 may be of various shapes and sizes, such as a cuboid shape, a cylindrical shape, and a hexagonal prism shape. Specifically, a shape of the housing 1200 may be determined according to a specific shape and size of the electrode assembly 1100. The housing 1200 may be made of various materials, such as copper, iron, aluminum, stainless steel, aluminum alloy, and plastic, which are not particularly limited in the embodiments of this application.

The electrode assembly 1100 is a component in which electrochemical reactions occur in the battery cell 1000. One or more electrode assemblies 1100 may be disposed in the housing. The electrode assembly 1100 is mainly formed by winding or stacking a positive electrode plate and a negative electrode plate, and an insulator is typically disposed between the positive electrode plate and the negative electrode plate. Parts of the positive electrode plate and the negative electrode plate that have active substances constitute a body portion of the electrode assembly 1100, while parts of the positive electrode plate and the negative electrode plate that have no active substance separately constitute a tab. A positive electrode tab and a negative electrode tab may both be located at one end of the body portion or be located at both ends of the body portion respectively. During formation of the electrode assembly 1100, after the positive electrode plate, the negative electrode plate, and the insulator are wound or stacked, the electrolyte needs to be injected into the housing, and the wound electrode assembly fully absorbs the injected electrolyte, so that the electrode assembly and the electrolyte can be well mixed to achieve an optimal infiltration effect. During charge and discharge of a battery, a positive electrode active substance and a negative electrode active substance react with an electrolyte, and the tabs are connected to electrode terminals to form a current loop.

During formation of the electrode assembly 1100, the winding or stacking the positive electrode plate, the negative electrode plate, and the insulator is a very important part of an electrode assembly production process. As shown in FIG. 2, the winding of the electrode assembly 1100 mainly refers to that roll materials such as a first electrode plate 1120, a first insulator 1110, a second electrode plate 1140, and a second insulator 1130 are disposed on a winding mandrel 300, and then the winding mandrel 300 is rotated to drive the roll materials to be wound so as to form the electrode assembly 1100. The first electrode plate 1120 may be a positive electrode plate or a negative electrode plate, and the second electrode plate 1140 may be a negative electrode plate or a positive electrode plate, and a stacking order thereof is not limited.

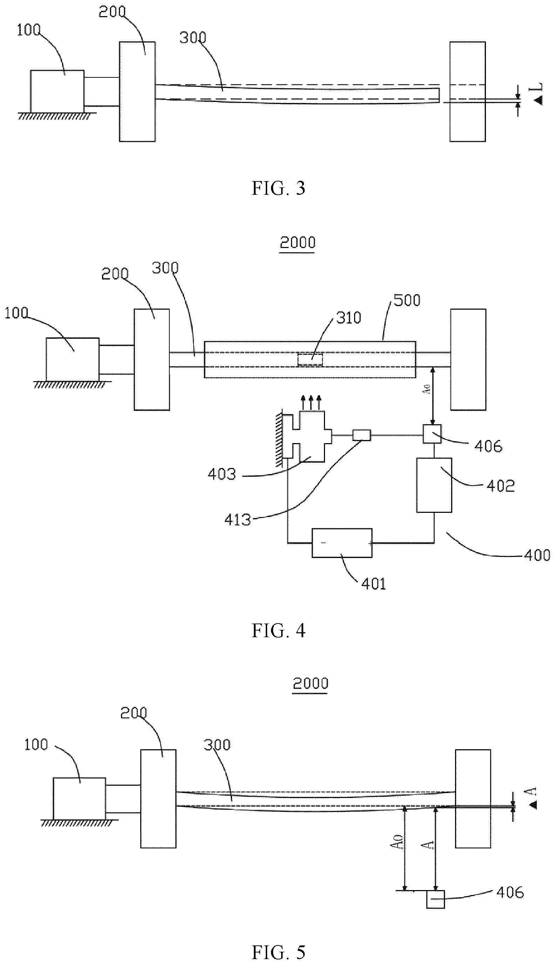

The applicant found in the research that during winding of the existing electrode assembly winding device, the winding mandrel is likely to deform under the action of its own gravity and tension of the roll materials, especially when the winding mandrel is long, the winding mandrel often deforms due to insufficient rigidity and the influence from the tension of the roll materials and its own gravity. The deformation of the winding mandrel is likely to cause undesirable winding of the roll materials and affect the winding efficiency of the roll materials. For example, it is easy to find displacement of the roll materials such as a positive electrode plate, a negative electrode plate, and an insulator, making a wound electrode assembly prone to a risk of short circuit in later use. In addition, the deformation of the winding mandrel is likely to cause the roll materials such as the electrode plates and the insulator to have wrinkles. When the electrode plates and the insulator have wrinkles, it leads to a larger volume of the wound electrode assembly and a lower battery capacity, thus leading to degraded battery performance. Moreover, the deformation of the winding mandrel is very likely to make the winding mandrel unable to align and proceed, which leads to detachment of the winding mandrel from winding mandrel bases during winding, thus leading to fracture of the winding mandrel. As shown in FIG. 3, when the winding mandrel 300 has no deformation, the winding mandrel 300 is inserted into winding mandrel bases 200 on two sides of the winding mandrel 300. When the winding mandrel 300 has deformation, it leads to detachment of the winding mandrel 300 from the winding mandrel bases 200. If the detachment process occurs during winding of the roll materials, it leads to fracture of the winding mandrel 300. In the prior art, the diameter of the winding mandrel 300 is usually increased to improve the rigidity of the winding mandrel 300 and decrease the deformation of the winding mandrel 300. However, the increase in the diameter of the winding mandrel 300 leads to an excessively large space in the middle of the electrode assembly, resulting in decreased energy density of the electrode assembly and further affecting the performance of the battery.

To solve the problem of deformation of the winding mandrel caused by the influence from the tension of the roll materials and the gravity of the winding mandrel during winding of the winding device in the prior art, embodiments of this application propose a winding device and a winding method. A magnetic portion is disposed on a winding mandrel, and a magnetism supply assembly is configured to provide a magnetic field toward the magnetic portion, so that the magnetic field interacts with a magnetic field generated by the magnetic portion to generate a magnetic attraction force or repulsion force. The magnetic force acts on the winding mandrel to resist the deformation of the winding mandrel. The magnetism supply assembly can provide the magnetic field toward the winding mandrel before or during winding of the roll materials and regulate intensity of the magnetic field in a real-time manner based on the deformation amount of the winding mandrel so as to keep the winding mandrel in a small-deformation state at all times. The winding device provided in the embodiments of this application has a simple structure and can well resist the deformation of the winding mandrel caused by the tension of the roll materials and the gravity of the winding mandrel to ensure that the winding mandrel is in a zero-deformation or small-deformation state at all times, which solves the problem of insufficient rigidity of the winding mandrel, making the winding device capable of winding the roll materials by using a winding mandrel with a smaller diameter, thereby improving the winding efficiency and quality of the roll materials and increasing the energy density of the battery.

According to an aspect, an embodiment of this application provides a winding device 2000. As shown in FIG. 4, the winding device 2000 is configured to wind a roll material 500, and the winding device 2000 includes a winding mandrel 300 and a magnetism supply assembly 400. The winding mandrel 300 is configured to wind the roll material 500, and the winding mandrel 300 includes a magnetic portion 310, the magnetic portion 310 being disposed along an axial direction of the winding mandrel 300. The magnetism supply assembly 400 is configured to provide a magnetic field, and the magnetism supply assembly 400 is disposed opposite the magnetic portion 310, where the magnetic field interacts with the magnetic portion 310 to generate a magnetic force so as to resist deformation of the winding mandrel 300.

FIG. 4 is a schematic diagram of the winding device 2000 proposed in this embodiment of this application. In some embodiments, the winding device 2000 includes a driving mechanism 100, winding mandrel bases 200, the winding mandrel 300, and the magnetism supply assembly 400. The driving mechanism 100 is disposed on a frame of the winding device 2000 and configured to transmit power to the winding mandrel 300 via a transmission mechanism. Optionally, the driving mechanism 100 may be a motor, and the motor is connected to the winding mandrel 300 via the transmission mechanism and configured to drive the winding mandrel 300 to rotate and wind the roll material 500 provided on the winding mandrel 300. The winding mandrel bases 200 are disposed on two sides of the winding mandrel 300 and configured to fasten the winding mandrel 300. Optionally, the winding mandrel 300 may be inserted into the winding mandrel bases 200. In some embodiments, the winding mandrel bases 200 can move relative to the winding mandrel 300. When the winding mandrel 300 completes winding of the roll material 500, the winding mandrel 300 can be pulled out of a winding mandrel base 200 on one side by moving the winding mandrel base 200 on the one side of the winding mandrel 300. In addition, the winding mandrel 300 is withdrawn from the wound roll material 500 to complete the winding of the roll material 500.

The roll material 500 may be an electrode plate and an insulator. The electrode plate and the insulator are wound to form an electrode assembly. The roll material 500 may alternatively be another roll material. The winding device provided in this embodiment of this application can wind the roll material. In this embodiment of this application, the roll material being wound to form an electrode assembly is used as an example for description.

The winding mandrel 300 includes a magnetic portion 310, where the magnetic portion 310 is disposed along the axial direction of the winding mandrel 300. Optionally, the magnetic portion 310 may be formed by applying a magnetic coating on a surface of the winding mandrel 300. The magnetic coating may be a magnetic material such as iron, cobalt, or nickel, and may alternatively be another magnetic material. This is not limited in this embodiment of this application. When the magnetic coating is applied on the surface of the winding mandrel 300, it can be applied to a region with a maximum deflection deformation amount of the winding mandrel 300. A magnetic force is provided to the region with the maximum deformation. The region with the maximum deflection deformation amount is typically a middle region of the winding mandrel 300. Certainly, optionally, the entire surface of the winding mandrel 300 may alternatively be coated with a magnetic material to adjust all regions of the winding mandrel. The winding mandrel 300 may alternatively be integrally formed from a magnetic material, so that any part of the winding mandrel 300 is magnetic. The winding mandrel 300 may alternatively be integrally formed from a magnetic material and a non-magnetic material that are spaced apart. For example, both ends of the winding mandrel 300 may be made of the non-magnetic material, a middle region with a large deflection deformation is made of the magnetic material, and the magnetic material and the non-magnetic material are combined together to form the winding mandrel 300. The winding mandrel 300 may be a rod or bar having a certain length, and its shape may be set based on the needs of a battery. The winding mandrel 300 may be of a cylindrical shape, a flat shape, and a prism shape (such as a regular quadrilateral prism shape or a positive pentagonal prism shape), but is not limited thereto.

The magnetism supply assembly 400 is disposed in correspondence with the magnetic portion 310 and configured to provide a magnetic field, and the magnetic field interacts with the magnetic portion 310 of the winding mandrel 300 to generate a magnetic force so as to resist the deformation of the winding mandrel 300. The magnetic force generated by the interaction between the magnetism supply assembly 400 and the magnetic portion 310 may be a repulsion force toward the magnetic portion 310 or an attraction force toward the magnetism supply assembly 400. For example, when the magnetism supply assembly 400 is disposed below the winding mandrel 300, to counteract the downward gravity of the winding mandrel 300 and the tension of the roll material 500, the magnetism supply assembly 400 needs to provide an upward repulsion force to the magnetic portion 310 of the winding mandrel 300, the repulsion force causes an upward deformation of the winding mandrel 300, and the deformation counteracts with a downward deformation caused by the gravity of the winding mandrel 300 and the tension of the roll material 500, so that the deformation of the winding mandrel 300 is decreased. When the magnetism supply assembly 400 is located above the magnetic portion 310, the magnetism supply assembly 400 needs to provide an upward attraction force to the magnetic portion 310 of the winding mandrel 300, the attraction force causes the upward deformation of the winding mandrel 300, and the deformation counteracts with the downward deformation caused by the gravity of the winding mandrel 300 and the tension of the roll material 500.

The magnetism supply assembly 400 can generate magnetic fields in various forms, may be arranged as a bar magnet or horseshoe magnet, and may alternatively be arranged as an excitation coil 403. When the magnetism supply assembly 400 is arranged as the excitation coil 403, intensity of a magnetic field of the excitation coil 403 can be regulated by regulating the of current or voltage flowing through the coil. When the magnetism supply assembly 400 is arranged as the bar magnet or horseshoe magnet, intensity of a magnetic field passing through the magnetic portion can be regulated by adjusting a distance between the bar magnet or horseshoe magnet and the magnetic portion. Regulation of the intensity of the magnetic field can regulate a magnetic force between the magnetism supply assembly 400 and the magnetic portion 310 so as to regulate the deformation of the winding mandrel 300.

In this embodiment of this application, the magnetic portion 310 is disposed on the winding mandrel 300, the magnetism supply assembly 400 is configured to provide the magnetic field toward the magnetic portion 310, and the magnetic field interacts with the magnetic portion 310 to generate the magnetic force so as to resist the deformation of the winding mandrel 300. In this way, the risk of displacement or wrinkles of electrode assemblies during winding is reduced, and detachment or fracture of the winding mandrel 300 caused by deformation during winding is also avoided, so that the winding efficiency of the electrode assembly is improved, and the battery performance is improved. In addition, because the deformation amount of the winding mandrel 300 is decreased, the winding device 2000 may use a winding mandrel with a smaller diameter and a larger length, which can further increase energy density of the battery.

In some embodiments, the magnetism supply assembly 400 includes a regulation unit 413 and the excitation coil 403, where the excitation coil 403 is disposed in correspondence with the magnetic portion 310, the regulation unit 413 is electrically connected to the excitation coil 403, and the regulation unit 413 is configured to regulate current and/or voltage flowing through the excitation coil 403 to regulate intensity of the magnetic field.

To conveniently regulate the intensity of the magnetic field of the magnetism supply assembly 400, in this embodiment of this application, the magnetism supply assembly 400 generates the magnetic field in the form of the excitation coil 403. The magnetic field generated in the form of the excitation coil 403 can conveniently change the magnitude of the voltage and/or current flowing through the excitation coil 403 to change the intensity of the magnetic field.

FIG. 4 is a schematic structural diagram of the magnetism supply assembly 400. The magnetism supply assembly 400 includes a power supply 401, the regulation unit 413, and the excitation coil 403, where the power supply 401 is configured to supply electrical energy to the magnetism supply assembly 400. To make the magnetic field generated by the excitation coil 403 to better interact with the magnetic field of the magnetic portion 310 on the winding mandrel 300, the excitation coil 403 is disposed at a position corresponding to the magnetic portion 310. For example, the excitation coil 403 may be disposed above the magnetic portion 310 or below the magnetic portion 310. A direction of the magnetic field of the excitation coil 403 may be adjusted by changing a direction of the current flowing through the excitation coil 403. For example, when the excitation coil 403 is disposed below the magnetic portion 310, mutually repulsive action forces need to be applied to the magnetic portion 310, and a current provided by the power supply 401 and flowing through the excitation coil 403 flows in a first direction. When the excitation coil 403 is disposed below the magnetic portion 310, mutually attractive action forces need to be applied to the magnetic portion 310, and the current provided by the power supply 401 and flowing through the excitation coil 403 flows in a second direction. The first direction and the second direction are two opposite directions.

In some embodiments, the regulation unit 413 may be a variable resistor. The current and/or voltage flowing through the excitation coil 403 is regulated by regulating a resistance value of the variable resistor so as to regulate the intensity of the magnetic field generated by the excitation coil 403. Certainly, the regulation unit 413 may alternatively be another current or voltage regulation apparatus for regulating the current or voltage flowing through the excitation coil 403, which is not limited herein.

The excitation coil 403 is an excitation coil unit formed by arranging a metal wire in a spiral shape or vortex shape and may alternatively be an excitation winding formed by winding a metal wire on a substrate made of a ferromagnetic material, which is not limited herein.

In this embodiment of this application, the regulation unit 413 and the excitation coil 403 are disposed, with the excitation coil disposed opposite the magnetic portion 310 of the winding mandrel 300, so that the intensity of the magnetic field formed by the magnetism supply assembly 400 can be regulated conveniently to regulate interaction forces between the magnetism supply assembly 400 and the magnetic portion 310 on the winding mandrel 300, improving convenience in regulation of the deformation of the winding mandrel 300.

In some embodiments, the magnetism supply assembly 400 includes a monitoring unit 406 and a control unit 402, where the monitoring unit 406 is configured to obtain the deformation of the winding mandrel 300 and send the deformation to the control unit 402; and the control unit 402 is electrically connected to the regulation unit 413 and configured to control the regulation unit 413 based on the deformation amount so as to regulate the intensity of the magnetic field.

Still referring to FIG. 4, the magnetism supply assembly 400 includes the control unit 402. The control unit 402 may be a single-chip microcontroller, a PLC chip, or another controller. The control unit 402 is electrically connected to the power supply 401, and is electrically connected to the regulation unit 413 for controlling the regulation unit 413, so as to control the magnitude of the current flowing through the excitation coil 403.

The magnetism supply assembly 400 further includes the monitoring unit 406. The monitoring unit 406 may be a displacement sensor or another monitoring device. The monitoring unit 406 is disposed adjacent to the winding mandrel 300 and configured to monitor the deformation of the winding mandrel 300. The deformation of the winding mandrel 300 being monitored by the displacement sensor is described below as an example. As shown in FIG. 5, the displacement sensor may be disposed at one end of the winding mandrel 300. A0 represents a distance between the surface of the winding mandrel and the displacement sensor when the winding mandrel has no deformation. A represents a distance between the surface of the winding mandrel and the displacement sensor when the winding mandrel undergoes deformation due to the influence of gravity or the tension of the roll material. The deformation amount $\Delta A$ of the winding mandrel is: $\Delta A = A0 - A$. When the winding mandrel performs winding of the roll material, the displacement sensor can also obtain the deformation of the winding mandrel in a real-time manner.

The control unit 402 obtains the deformation amount $\Delta A$ of the winding mandrel and estimates a deformation amount at a position of the magnetic portion 310 on the winding mandrel 300 based on a preset deflection deformation model to obtain a deformation amount $\Delta A'$ of the magnetic portion 310. If the deformation amount $\Delta A'$ of the magnetic portion 310 is excessively large, for example, greater than a preset threshold, the control unit 402 controls the regulation unit 413 based on the deformation amount to regulate the intensity of the magnetic field and decrease the deformation of the winding mandrel 300, thereby controlling the deformation of the winding mandrel 300 within a specified range.

The monitoring unit 406 can also monitor other positions of the winding mandrel 300 to obtain the deformation of the winding mandrel 300. For example, CCD cameras are disposed at both ends of the winding mandrel 300 and configured to obtain an image of the winding mandrel 300 during winding and analyze the image to obtain the deformation of the winding mandrel 300. This is not limited herein.

In this embodiment of this application, the monitoring unit 406 is provided to monitor the deformation of the winding mandrel 300, and the control unit 402 is provided to regulate the intensity of the magnetic field generated by the excitation coil 403 based on the deformation amount of the winding mandrel 300, regulating interaction forces between the magnetic field of the excitation coil 403 and the magnetic portion 310 on the winding mandrel 300, thereby regulating the deformation of the winding mandrel 300 such that the deformation can be kept within a small range.

In some embodiments, the monitoring unit 406 is disposed opposite one or both ends of the winding mandrel 300. As shown in FIG. 4, to accurately monitor the deformation of the winding mandrel 300, in this embodiment of this application, a deformation amount at a specific position of the winding mandrel 300 is monitored, and the deformation is obtained in a method of predicting the deformation at the position of the magnetic portion 310 based on the deflection deformation model. During winding of the winding mandrel 300, a position wound with the roll material is shielded by the roll material; and as the roll material is wound, the position becomes thicker, and the deformation of the winding mandrel 300 becomes more difficult to measure. However, the both ends of the winding mandrel 300 are exposed at all times during winding, making it easy to measure the deformation of the winding mandrel 300. Therefore, in this embodiment of this application, the monitoring unit 406 is disposed at one or both ends of the winding mandrel 300, the deformation at the one or both ends of the winding mandrel 300 is measured, and the deformation at the position of the magnetic portion 310 is measured with combination of the deflection deformation model, so that deformation amounts at various positions of the winding mandrel 300 can be conveniently and accurately obtained, the structure of the winding device 2000 is simplified, and the deformation of the winding mandrel 300 can be conveniently obtained.

In some embodiments, to more accurately regulate the deformation of the winding mandrel 300, in these embodiments of this application, multiple magnetic portions 310 are spaced apart on the winding mandrel 300 along the axial direction of the winding mandrel 300; the magnetism supply assembly 400 includes multiple excitation coils 403, where the excitation coils 403 are disposed opposite the magnetic portions 310 in one-to-one correspondence.

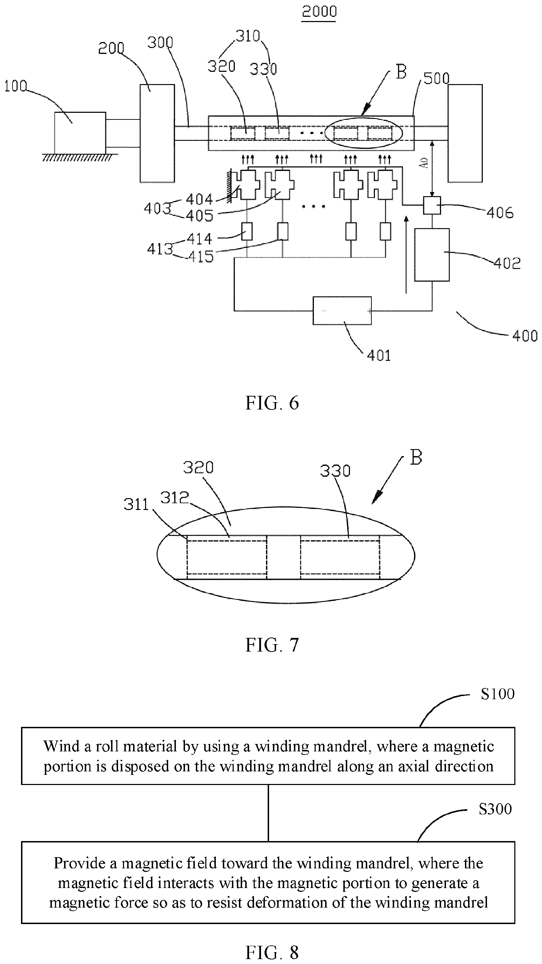

When the winding mandrel 300 is long, the deformation amount of its deformation is large, so it is difficult to completely control the deformation of the winding mandrel 300 by adjusting a single position of the winding mandrel 300. As shown in FIG. 6, in this embodiment of this application, it is proposed that the multiple magnetic portions 310 are spaced apart along the axial direction of the winding mandrel 300, where the multiple magnetic portions 310 include at least a first magnetic portion 320 and a second magnetic portion 330. The first magnetic portion 320 and the second magnetic portion 330 may be spaced apart at same or different spacings as appropriate to needs. For example, the winding mandrel 300 has a large deformation in the middle of the winding mandrel, so that the multiple magnetic portions 310 are relatively densely disposed at relatively small spacings in the middle of the winding mandrel 300. The winding mandrel 300 has relatively small deformation amounts at the both ends of the winding mandrel, so that a relatively large distance may be present between the magnetic portions 310.

Correspondingly, corresponding to the multiple magnetic portions 310, the magnetism supply assembly 400 includes the multiple excitation coils 403, where the multiple excitation coils 403 include at least a first excitation coil 404 and a second excitation coil 405. The excitation coils 403 and the magnetic portions 310 are provided in a same quantity and disposed in one-to-one correspondence. As shown in FIG. 6, the magnetism supply assembly 400 includes at least the first excitation coil 404 and the second excitation coil 405. To regulate current flowing through the first excitation coil 404 and the second excitation coil 405, a first variable resistor 414 is connected in series to the first excitation coil 404 to form a first series circuit, and a second variable resistor 415 is connected in series to the second excitation coil 405 to form a second series circuit. By analogy, various series circuits are connected in parallel to each other and connected to the monitoring unit 406 and the control unit 402 respectively.

The monitoring unit 406 monitors deformation of the winding mandrel to obtain a deformation amount of the winding mandrel 300 and sends the deformation to the control unit 402. The control unit 402 is in communication connection with regulation units 413, calculates deformation amounts corresponding to the magnetic portions 310 based on the deformation amount and through the deflection deformation model, and separately regulates the regulation units 413 corresponding to the magnetic portions 310 based on the deformation amounts corresponding to the magnetic portions 310, thereby regulating current or voltage flowing through excitation coils corresponding to the magnetic portions and regulating intensities of magnetic fields of the excitation coils corresponding to the magnetic portions.

In this way, the deformation at a specific position of the winding mandrel 300 can be regulated more accurately, so that all positions of the winding mandrel 300 can be stressed uniformly, and the winding mandrel 300 has zero deformation or a deformation amount within an allowable range at all times.

In some embodiments, to better dispose the magnetic portion 310, an annular groove 311 is provided on the surface of the winding mandrel 300, where the magnetic portion 310 is disposed in the annular groove 311. As shown in FIG. 7, the winding mandrel 300 is provided with the annular groove 311 along the axial direction. The depth of the annular groove 311 can be set as appropriate to needs. The inside of the annular groove 311 is coated with a magnetic coating 312 to form a magnetic portion 310. When the winding mandrel 300 has multiple magnetic portions 310, the magnetic portions 310 are spaced apart at a specified spacing.

The annular groove 311 is provided on the surface of the winding mandrel 300, and the magnetic portion 310 is disposed in the annular groove 311, which can prevent the magnetism supply assembly 400 from protruding from the surface of the winding mandrel 300 and affecting the quality of the roll material at a wound position.

In some embodiments, an outer side surface of the magnetic portion 310 is flush with the surface of the winding mandrel 300. After the winding is completed, one end of the winding mandrel 300 is pulled out of a winding mandrel base 200. In addition, the winding mandrel 300 needs to be pulled out of the wound roll material 500. The outer side surface of the magnetic portion 310 being flush with the surface of the winding mandrel 300 can keep the surface of the winding mandrel 300 in a smooth state, so that the winding mandrel 300 is more easily pulled out of the roll material 500.

In this embodiment of this application, the magnetic portion 310 is disposed on the winding mandrel 300, the magnetism supply assembly 400 is configured to provide the magnetic field toward the magnetic portion 310, and the magnetic field interacts with the magnetic portion 310 to generate the magnetic force so as to resist the deformation of the winding mandrel 300. In this way, the risk of displacement or wrinkles of electrode assemblies during winding is reduced, and detachment or fracture of the winding mandrel caused by deformation during winding is also avoided, so that the problem of insufficient rigidity of a long winding mandrel with a width of 100 mm-1000 mm can be effectively solved, the deflection deformation of the winding mandrel is significantly improved, and the rigidity of the winding mandrel is improved. In addition, the deformation of the winding mandrel is greatly decreased, so that under a same-width condition, the winding device may use a winding mandrel with a smaller diameter. For example, for a winding mandrel with a width of 600 mm, its diameter can be reduced from 12 mm to 8 mm, so that the capacity and energy density of the battery are greatly increased. Moreover, in this embodiment of this application, provision of the multiple magnetic portions and the excitation coils can more specifically regulate the deformation amounts at all positions, making all positions of the winding mandrel stressed uniformly, thereby minimizing the deformation of the winding mandrel.

According to another aspect, an embodiment of this application further proposes a winding method. The winding method is mainly used for winding a roll material, may be applied to the winding device 2000 proposed by the embodiment of this application in FIG. 4 or FIG. 6, and may also be applied to a winding device in another form. The winding method being implemented on the winding device can correct the deformation of the winding mandrel before winding is started and can also correct the deformation of the winding mandrel during winding of the winding mandrel. Implementation of the winding method can minimize the deformation of the winding mandrel caused by its own gravity and tension of the roll material, avoiding formation of wrinkles on the roll material during winding, thereby improving the quality of a battery.

FIG. 8 is a schematic flowchart of a winding method according to an embodiment of this application. The winding method includes the following steps.

S100: Wind a roll material by using a winding mandrel, where a magnetic portion is disposed on the winding mandrel along an axial direction.

S300: Provide a magnetic field toward the winding mandrel, where the magnetic field interacts with the magnetic portion of the winding mandrel to generate a magnetic force so as to resist deformation of the winding mandrel.

Before winding is started, a winding device needs to place the roll material on the winding mandrel. A clamping portion may be disposed on the winding mandrel to clamp a head end of the roll material, an adhesion portion may be disposed on the winding mandrel to adhere the head end of the roll material to the winding mandrel, or the roll material may be placed on the winding mandrel in another manner. When the winding mandrel starts rotating, the roll material can be wound outside the winding mandrel to form an electrode assembly.

In this embodiment of this application, the magnetic portion is disposed on the winding mandrel used by the winding device along the axial direction, where the magnetic portion may be formed by applying a magnetic coating on a surface of the winding mandrel, and the magnetic coating may be a magnetic material such as iron, cobalt, or nickel, and may alternatively be another magnetic material. When the magnetic coating is applied on the surface of the winding mandrel, it can be applied to a region with a maximum deflection deformation amount of the winding mandrel. A magnetic force is provided to the region with the maximum deflection deformation amount. The region with the maximum deflection deformation amount is typically a middle region of the winding mandrel. The entire surface of the winding mandrel may alternatively be coated with a magnetic material. The winding mandrel may alternatively be integrally formed from a magnetic material, so that the winding mandrel itself has magnetism. The winding mandrel may alternatively be integrally formed from a magnetic material and a non-magnetic material that are spaced apart. For example, both ends of the winding mandrel may be made of the non-magnetic material, a middle region with a large deflection deformation is made of the magnetic material, and the magnetic material and the non-magnetic material are combined together to form the winding mandrel.

A magnetic field is provided to the winding mandrel by the magnetism supply assembly or in other manners, so that the magnetic field interacts with the magnetic portion of the winding mandrel to generate a magnetic force so as to resist deformation of the winding mandrel.

A magnetic field is provided to the winding mandrel before the winding mandrel starts winding. Before the winding device starts winding, the winding mandrel is disposed on a winding mandrel base. Due to its own gravity of the winding mandrel, the winding mandrel itself also has deformation even if no roll material is wound on the surface of the winding mandrel. When the winding device is started, the magnetism supply assembly can start providing a magnetic field toward the winding mandrel, so that the winding mandrel can be kept in a zero-deformation or small-deformation state under the action of a magnetic force before winding is started.

Certainly, to save power, it is also possible to provide a magnetic field toward the winding mandrel only when winding is started. When winding is started, the magnetism supply assembly starts providing a magnetic field toward the winding mandrel, where the magnetic field interacts with the magnetic portion of the winding mandrel to generate a magnetic force, so that the winding mandrel is kept in the zero-deformation or small-deformation state at all times during winding.

The magnetism supply assembly or another external magnetic field provides a magnetic field toward the magnetic portion of the winding mandrel, where a magnetic force generated by interaction between the magnetic field and the magnetic portion of the winding mandrel may be a repulsion force toward the magnetic portion or an attraction force toward the magnetism supply assembly. When the magnetism supply assembly is disposed below the winding mandrel, to counteract the downward gravity of the winding mandrel and the tension of the roll material, the magnetism supply assembly needs to provide an upward repulsion force to the magnetic portion of the winding mandrel, the repulsion force causes an upward deformation of the winding mandrel, and the deformation counteracts with a downward deformation caused by the gravity of the winding mandrel and the tension of the roll material, so that the deformation of the winding mandrel is decreased. When the magnetism supply assembly is located above the magnetic portion, the magnetism supply assembly needs to provide an upward attraction force to the magnetic portion of the winding mandrel, the attraction force causes the upward deformation of the winding mandrel, and the deformation counteracts with the downward deformation caused by the gravity of the winding mandrel and the tension of the roll material.

In the winding method of this embodiment of this application, the magnetic field is provided to the winding mandrel with the magnetic portion, and the magnetic field interacts with the magnetic field of the magnetic portion to generate the magnetic force so as to resist the deformation of the winding mandrel. In this way, the risk of displacement or wrinkles of electrode assemblies during winding is reduced, and detachment or fracture of the winding mandrel caused by deformation during winding is also avoided, so that the winding efficiency of the electrode assembly is improved, and the performance of the battery is improved. In addition, because the deformation of the winding mandrel is decreased, the winding device may use a winding mandrel with a smaller diameter and a larger length, which can further increase energy density of the battery.

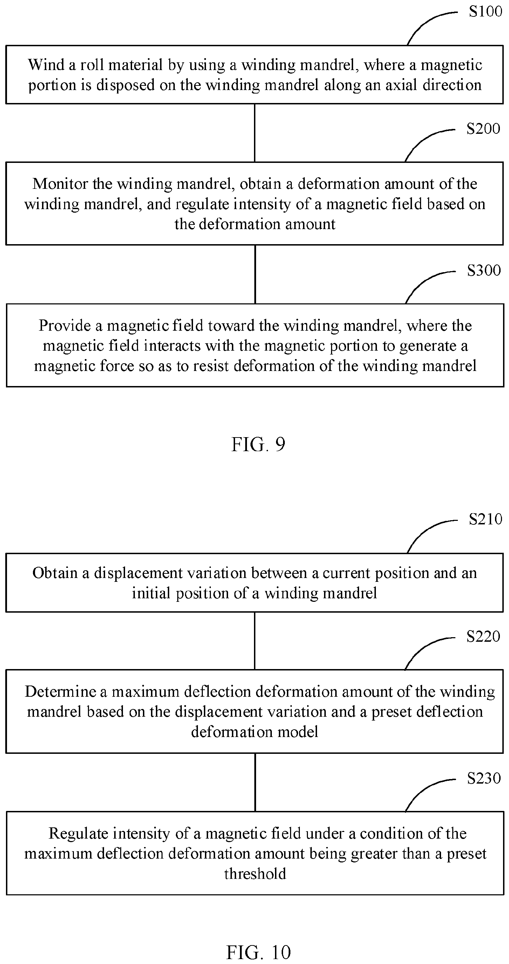

In some embodiments, as shown in FIG. 9, to regulate the deformation of the winding mandrel in a real-time manner during winding of the winding mandrel, the winding method proposed in this embodiment of this application further includes the following step.

S200: Monitor the winding mandrel, obtain a deformation amount of the winding mandrel, and regulate intensity of the magnetic field based on the deformation amount.

During winding of the winding mandrel, as the thickness of the roll material wound on the surface of the winding mandrel increases, the tension applied to the winding mandrel gradually increases, and the deformation of the winding mandrel gradually increases. The intensity of the magnetic field provided by the magnetism supply assembly when the winding mandrel starts winding is insufficient to resist the tension increasing gradually. Therefore, in this embodiment of this application, to regulate the intensity of the magnetic field in a real-time manner based on the deformation amount of the winding mandrel during winding so as to regulate the magnetic force applied by the magnetic field toward the winding mandrel in a real-time manner, it is proposed that the winding mandrel is monitored during winding of the winding mandrel to obtain the deformation of the winding mandrel and regulate the intensity of the magnetic field based on the deformation amount of the winding mandrel.

The intensity of the magnetic field of the magnetism supply assembly can be regulated in multiple manners. For example, the intensity of the magnetic field can be regulated by regulating the of current or voltage flowing through the magnetism supply assembly, or a magnetic force between the magnetic field of the magnetism supply assembly and the magnetic portion of the winding mandrel can be regulated by adjusting a distance between the magnetism supply assembly and the magnetic portion of the winding mandrel.

For example, when the magnetism supply assembly is disposed below the winding mandrel, the upward deformation of the winding mandrel is mainly caused by the upward repulsion force provided by the magnetism supply assembly to the magnetic portion of the winding mandrel. When the downward deformation of the winding mandrel increases, the intensity of the magnetic field of the magnetism supply assembly needs to be improved to enhance the repulsion force between the magnetic field of the magnetism supply assembly and the magnetic portion of the winding mandrel, so as to counteract the deformation increasing gradually of the winding mandrel. When the magnetism supply assembly is located above the magnetic portion, the upward deformation of the winding mandrel is mainly caused by the upward attraction force provided by the magnetism supply assembly to the magnetic portion of the winding mandrel. When the downward deformation of the winding mandrel increases, the intensity of the magnetic field of the magnetism supply assembly needs to be improved to enhance the attraction force between the magnetic field of the magnetism supply assembly and the magnetic portion of the winding mandrel, so as to counteract the deformation increasing gradually of the winding mandrel.

In this embodiment of this application, the winding mandrel is monitored, the deformation of the winding mandrel is obtained in a real-time manner, and the intensity of the magnetic field is regulated based on the deformation amount in a real-time manner, so that a magnetic force applied to the winding mandrel is regulated, which can keep the deformation of the winding mandrel within a small range during winding of the winding mandrel.

In some embodiments, as shown in FIG. 10, to more accurately regulate the deformation of the winding mandrel, step S200 includes the following steps.

S210: Obtain a displacement variation between a current position and an initial position of the winding mandrel.

S220: Determine a maximum deflection deformation amount of the winding mandrel based on the displacement variation and a preset deflection deformation model.

S230: Regulate the intensity of the magnetic field under a condition of the maximum deflection deformation amount being greater than a preset threshold.

During winding of the winding mandrel, the deformation of the winding mandrel varies with the thickness of the roll material. How to accurately obtain the deformation of the winding mandrel becomes very important. In this embodiment of this application, a displacement variation at a specific position of the winding mandrel is obtained, and then the maximum deflection deformation amount of the winding mandrel is determined based on the preset deflection deformation model. In this way, the deformation of the winding mandrel can be accurately predicted, and the intensity of the magnetic field is regulated based on the deformation amount, thereby regulating the deformation of the winding mandrel.

The deformation of the winding mandrel can be obtained in multiple manners. In a manner, the deformation amounts of one or both ends of the winding mandrel are obtained by the displacement sensor. Because the both ends of the winding mandrel are exposed at all times during winding, the deformation amounts of the ends can be obtained by the displacement sensor. As shown in FIG. 5, A0 represents a distance between the surface of the winding mandrel and the displacement sensor when the winding mandrel has no deformation. A represents a distance between the surface of the winding mandrel and the displacement sensor when the winding mandrel has deformation caused by the influence from the gravity or the tension of the roll material.

In this case, the deformation amount $\Delta A$ of the winding mandrel is as follows: $\Delta A = A0 - A$. When the winding mandrel rotates, the displacement sensor can also obtain the deformation of the winding mandrel in a real-time manner. After the ends of the winding mandrel are monitored to obtain the deformation amounts of the positions, the deformation of the magnetic portion of the winding mandrel is estimated based on the preset deflection deformation model to obtain the maximum deflection deformation amount $\Delta A'$ of the magnetic portion.

In another manner, CCD cameras may alternatively be disposed at the both ends of the winding mandrel to take pictures of the winding mandrel during winding of the winding mandrel, and image analysis is performed to obtain the maximum deflection deformation amount of the winding mandrel. This is not described herein.

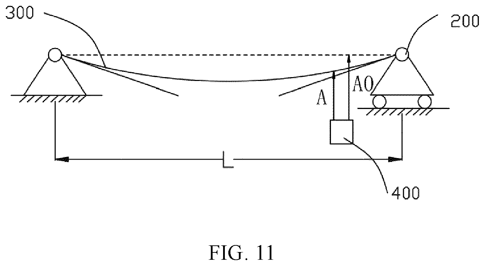

That the deformation of the magnetic portion of the winding mandrel is estimated based on the deformation amount $\Delta A$ of the winding mandrel and through the preset deflection deformation model can be performed in the following manner. FIG. 11 shows a simplified model for calculation of the maximum deflection deformation amount based on the deformation amount of the winding mandrel. A0 represents a distance between the surface of the winding mandrel and the displacement sensor when the winding mandrel has no deformation. A represents a distance between the surface of the winding mandrel and the displacement sensor when the winding mandrel has deformation caused by the influence from the gravity or the tension of the roll material. L represents length of the winding mandrel. A calculation formula for the deflection deformation amount of the winding mandrel is as follows:

$$y = -\frac{qx}{24EI}(L^3 - 2Lx^2 + x^3),$$

where q represents tension coefficient of the roll material, E represents elasticity modulus of the winding mandrel, L represents length of the winding mandrel, I represents cross-sectional inertia moment of the winding mandrel, and the cross-sectional inertia moment of the winding mandrel is related to the shape of the winding mandrel.

When

$$x = \frac{L}{2},$$

$$y_{\max} = -\frac{F}{48EI}*(L^3 - \frac{1}{2}L^3 + \frac{1}{8}L^3) = -\frac{5FL^3}{384EI},$$

where F = q*L as tension of the roll material.

The cross-sectional inertia moment of the winding mandrel is $I = \frac{\pi D^4}{64}$, where D represents diameter of the winding mandrel.

$$y_{\max} = -\frac{5FL^3}{384EI} = -\frac{5FL^3}{6\pi ED^4}$$

can be obtained.

Actual data is measured based on the simplified model of the maximum deflection deformation amount shown in FIG. 11 and a test platform, and the simplified model is corrected. The corrected deflection deformation model is as follows:

$$y_{\max} = -K\frac{5FL^3}{6\pi ED^4} + b,$$

where K represents correction coefficient, and b represents compensation magnitude.

The deformation amount $\Delta A = A0 - A$ of the winding mandrel is calculated based on the corrected deflection deformation model and position A of the winding mandrel obtained through measurement, so that it can be deduced that when the deformation amount of the winding mandrel is $x = \Delta A$, the maximum deflection deformation amount $y_{\max}$ of the winding mandrel is calculated according to the calculation formula for the deflection deformation amount.

After the maximum deflection deformation amount of the winding mandrel is obtained, the intensity of the magnetic field can be directly regulated based on the maximum deflection deformation amount, thereby regulating the deformation of the winding mandrel. However, such manner easily leads to excessively frequent regulation of the winding mandrel and makes the winding mandrel in an unstable state, which in turn affects the winding effect of the winding mandrel. In this embodiment of this application, after the maximum deflection deformation amount of the winding mandrel is obtained, it is determined whether the maximum deflection deformation amount is greater than the preset threshold, that is, whether the deformation of the winding mandrel is within an appropriate range. If the deformation of the winding mandrel is within the appropriate range, the intensity of the magnetic field is not regulated. If the maximum deflection deformation amount is greater than the preset threshold, the intensity of the magnetic field is regulated, making the deformation of the winding mandrel within the appropriate range.

In this embodiment of this application, the displacement variation of the winding mandrel is monitored, and the maximum deflection deformation amount is predicted based on the deflection deformation model, so that the maximum deflection deformation amount of the winding mandrel is determined. The intensity of the magnetic field is regulated only when the maximum deflection deformation amount is greater than the preset threshold. In this way, the operation of obtaining the deformation of the winding mandrel is simplified, the accuracy in obtaining the deformation of the winding mandrel is improved, the frequent regulation of the winding mandrel is also avoided, and the winding efficiency is improved.

In some embodiments, to more accurately regulate the deformation of the winding mandrel, the winding mandrel with multiple magnetic portions spaced apart along the axial direction is configured to wind the roll material. Magnetic fields are separately provided to the magnetic portions on the winding mandrel, the winding mandrel is monitored, the deformation of the winding mandrel is obtained, and intensities of the magnetic fields corresponding to the magnetic portions are separately regulated based on the deformation amount.

When the winding mandrel is long, the deformation amount of its deformation is large, so it is difficult to completely control the deformation of the winding mandrel by adjusting a single position of the winding mandrel. In these embodiments of this application, the winding mandrel with multiple magnetic portions spaced apart along its axial direction is configured to wind the roll material, and the magnetic fields are separately provided to the magnetic portions. The multiple magnetic portions may be spaced apart at same or different spacings as appropriate to needs. For example, the winding mandrel has a large amount of deformation in the middle of the winding mandrel, so that the multiple magnetic portions are relatively densely disposed at relatively small spacings in the middle of the winding mandrel. The winding mandrel has relatively small amounts of deformation at the two ends, so that a relatively large distance may be present between the magnetic portions.

The different magnetic fields being separately provided to the magnetic portions can apply different magnetic forces to different positions of the winding mandrel, thereby regulating the deformation amounts at different positions of the winding mandrel. During winding of the winding mandrel, the deformation amount of the winding mandrel is monitored, deformation amounts at positions corresponding to the magnetic portions are predicted based on the deflection deformation model, and the intensity of the magnetic field corresponding to each magnetic portion is regulated based on the deformation amount corresponding to each magnetic portion at the predicted position, thereby separately adjusting different positions of the winding mandrel.

In this embodiment of this application, in this way, the deformation at a specific position of the winding mandrel can be regulated more accurately, so that all positions of the winding mandrel can be stressed uniformly, and the winding mandrel has zero deformation or a deformation amount within an allowable range at all times.

In some embodiments, to more accurately regulate the deformation amount of the winding mandrel, the displacement variation between the current position and the initial position of the winding mandrel is obtained, the maximum deflection deformation amounts corresponding to the positions of the magnetic portions on the winding mandrel are determined based on the displacement variation and the preset deflection deformation model, and the intensities of the magnetic fields corresponding to the magnetic portions are respectively regulated based on the maximum deflection deformation amounts corresponding to the positions of the magnetic portions and preset thresholds of the positions of the magnetic portions.

When the intensities of the magnetic fields corresponding to the magnetic portions are regulated based on the deformation amount of the winding mandrel, the deformation amounts at the positions corresponding to the magnetic portions can be predicted based on the deflection deformation model, the maximum deflection deformation amount corresponding to each magnetic portion is determined, and the intensity of the magnetic field corresponding to each magnetic portion is regulated based on the determined maximum deflection deformation amount corresponding to each magnetic portion.

When the intensity of the magnetic field corresponding to each magnetic portion is regulated based on the maximum deflection deformation amount corresponding to each magnetic portion, it can be determined first whether the maximum deflection deformation amount corresponding to each magnetic portion is within its preset threshold range. If the maximum deflection deformation amount corresponding to each magnetic portion is within its preset threshold range, it indicates that the deformation of the portion of the winding mandrel is small and may not need to be regulated. If the maximum deflection deformation amount corresponding to each magnetic portion exceeds its preset threshold range, it indicates that the deformation of the portion of the winding mandrel is large, the intensity corresponding to the magnetic portion needs to be regulated. It should be noted that because different positions of the magnetic portions on the winding mandrel have different deformations, different threshold ranges need to be separately set for different magnetic portions. The winding mandrel typically has a large deformation in the middle and small deformation amounts at both ends. Therefore, the threshold corresponding to the magnetic portion in the middle may be set as a large value, and the thresholds corresponding to the magnetic portions at the both ends of the winding mandrel may be set as small values.

In this embodiment of this application, the displacement variation of the winding mandrel is monitored, the maximum deflection deformation amounts corresponding to the magnetic portions are predicted based on the deflection deformation quantity model, and different thresholds are set for the magnetic portions. When the maximum deflection deformation amounts corresponding to the magnetic portions are greater than the preset thresholds corresponding to the magnetic portions, the intensities of the magnetic fields corresponding to the magnetic portions are regulated. In this way, the accuracy in obtaining the deformation of the winding mandrel is improved, the frequent regulation of the winding mandrel is also avoided, and the winding efficiency is improved.

In the winding method of this embodiment of this application, the magnetic field is provided to the magnetic portion on the winding mandrel, and the magnetic field interacts with the magnetic portion to generate the magnetic force so as to resist the deformation of the winding mandrel. In this way, the risk of displacement or wrinkles of electrode assemblies during winding is reduced, detachment or fracture of the winding mandrel caused by deformation during winding is also avoided, so that the deflection deformation of the winding mandrel is significantly improved, and the rigidity of the winding mandrel is improved. In addition, the deformation of the winding mandrel is greatly decreased, so that under a same-width condition, the winding device may use a winding mandrel with a smaller diameter, so that the capacity and energy density of the battery are greatly increased.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the foregoing embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1. A winding device, **characterized by** comprising:

   a winding mandrel configured to wind a roll material, wherein the winding mandrel comprises a magnetic portion, the magnetic portion being disposed along an axial direction of the winding mandrel; and
   a magnetism supply assembly configured to provide a magnetic field, wherein the magnetism supply assembly is disposed in correspondence with the magnetic portion, and the magnetic field interacts with the magnetic portion to generate a magnetic force so as to resist deformation of the winding mandrel.

2. The winding device according to claim 1, **characterized in that** the magnetism supply assembly comprises a regulation unit and an excitation coil, wherein

   the excitation coil is disposed in correspondence with the magnetic portion; and
   the regulation unit is electrically connected to the excitation coil, and the regulation unit is configured to regulate current and/or voltage flowing through the excitation coil to regulate intensity of the magnetic field.

3. The winding device according to claim 2, **characterized in that** the magnetism supply assembly comprises a monitoring unit and a control unit, wherein

   the monitoring unit is configured to obtain a deformation amount of the winding mandrel and send the deformation to the control unit; and
   the control unit is electrically connected to the regulation unit, and the control unit is configured to control the regulation unit based on the deformation amount so as to regulate the intensity of the magnetic field.

4. The winding device according to claim 3, **characterized in that** the monitoring unit is disposed opposite one or both ends of the winding mandrel.

5. The winding device according to any one of claims 2 to 4, **characterized in that** multiple magnetic portions are spaced apart along the axial direction of the winding mandrel; and
   the magnetism supply assembly comprises multiple excitation coils, wherein the excitation coils are disposed opposite the magnetic portions in one-to-one correspondence.

6. The winding device according to any one of claims 1 to 5, **characterized in that** an annular groove is provided on a surface of the winding mandrel, and the magnetic portion is disposed in the annular groove.

7. The winding device according to claim 6, **characterized in that** an outer side surface of the magnetic portion is flush with the surface of the winding mandrel.

8. A winding method, **characterized in that** the method comprises:

   winding a roll material by using a winding mandrel, wherein a magnetic portion is disposed on the winding mandrel along an axial direction;
   providing a magnetic field toward the winding mandrel, wherein the magnetic field interacts with the magnetic portion to generate a magnetic force so as to resist deformation of the winding mandrel.

9. The winding method according to claim 8, **characterized in that** the method comprises:

   monitoring the winding mandrel and obtaining a deformation amount of the winding mandrel; and
   regulating intensity of the magnetic field based on the deformation amount.

10. The winding method according to claim 9, **characterized in that** the obtaining a deformation amount of the winding mandrel and regulating intensity of the magnetic field based on the deformation amount comprise:

obtaining a displacement variation between a current position and an initial position of the winding mandrel;
determining a maximum deflection deformation amount of the winding mandrel based on the displacement variation and a preset deflection deformation model; and
regulating the intensity of the magnetic field under a condition of the maximum deflection deformation amount being greater than a preset threshold.

11. The winding method according to any one of claims 8 to 10, **characterized in that** multiple magnetic portions are spaced apart along the axial direction of the winding mandrel; and
the winding method further comprises:

providing magnetic fields toward the magnetic portions on the winding mandrel respectively;
monitoring the winding mandrel and obtaining a deformation amount of the winding mandrel; and
regulating intensities of the magnetic fields corresponding to the magnetic portions based on the deformation amount.

12. The winding method according to claim 11, **characterized in that** the obtaining a deformation amount of the winding mandrel and regulating intensities of the magnetic fields corresponding to the magnetic portions based on the deformation amount comprise:

obtaining a displacement variation between a current position and an initial position of the winding mandrel;
determining maximum deflection deformation amounts corresponding to positions of the magnetic portions on the winding mandrel based on the displacement variation and a preset deflection deformation model; and
separately regulating the intensities of the magnetic fields corresponding to the magnetic portions based on the maximum deflection deformation amounts corresponding to the positions of the magnetic portions and preset thresholds of the positions of the magnetic portions.

1000

1300

1100

1200

FIG. 1

1110

1120

1130

1140

300

FIG. 2

FIG. 3

2000

FIG. 4

2000

FIG. 5

2000

FIG. 6

FIG. 7

S100

Wind a roll material by using a winding mandrel, where a magnetic portion is disposed on the winding mandrel along an axial direction

S300

Provide a magnetic field toward the winding mandrel, where the magnetic field interacts with the magnetic portion to generate a magnetic force so as to resist deformation of the winding mandrel

FIG. 8

S100

Wind a roll material by using a winding mandrel, where a magnetic portion is disposed on the winding mandrel along an axial direction

S200

Monitor the winding mandrel, obtain a deformation amount of the winding mandrel, and regulate intensity of a magnetic field based on the deformation amount

S300

Provide a magnetic field toward the winding mandrel, where the magnetic field interacts with the magnetic portion to generate a magnetic force so as to resist deformation of the winding mandrel

FIG. 9

S210

Obtain a displacement variation between a current position and an initial position of a winding mandrel

S220

Determine a maximum deflection deformation amount of the winding mandrel based on the displacement variation and a preset deflection deformation model

S230

Regulate intensity of a magnetic field under a condition of the maximum deflection deformation amount being greater than a preset threshold

FIG. 10

FIG. 11

## INTERNATIONAL SEARCH REP

| | International application No. |
| --- | --- |
| | **PCT/CN2022/096279** |

**A. CLASSIFICATION OF SUBJECT MATTER**

H01M 10/04(2006.01)i; H01M 10/0587(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 卷绕, 卷针, 磁, 变形, 调整, 磁场, 强度, 电流, 电压, wind, winding needle, magnetic, deformation, adjust, magnetic field, strength, current, voltage

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114171777 A (JIANGSU CONTEMPORARY AMPEREX TECHNOLOGY LTD.) 11 March 2022 (2022-03-11) description, paragraphs 4-103, and figures 1-11 | 1-12 |
| X | CN 101687380 A (FABIO PERINI S.P.A.) 31 March 2010 (2010-03-31) description, p. 3, paragraph 3 to p. 7, paragraph 6, and figures 1-2 | 1, 6-8 |
| Y | CN 101687380 A (FABIO PERINI S.P.A.) 31 March 2010 (2010-03-31) description, p. 3, paragraph 3 to p. 7, paragraph 6, and figures 1-2 | 2-5, 9-12 |
| Y | KR 20100023071 A (DAWONSYS CO., LTD.) 04 March 2010 (2010-03-04) description, paragraphs 2-54, and figures 1-5 | 2-5, 9-12 |
| Y | JP 2001205325 A (NIPPON KOKAN K. K.) 31 July 2001 (2001-07-31) description, paragraphs 3-17, and figures 1-6 | 2-5, 9-12 |
| Y | CN 103492604 A (SINFONIA TECHNOLOGY CO., LTD.) 01 January 2014 (2014-01-01) description, paragraphs 18-128, and figures 1-22 | 2-5, 9-12 |
| A | CN 108346829 A (BOZHON PRECISION INDUSTRY TECHNOLOGY CO., LTD.) 31 July 2018 (2018-07-31) entire document | 1-12 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 October 2022** | **01 November 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REP
Information on patent family memb

International application No.

**PCT/CN2022/096279**

| Patent document cited in search report | | | Publication date (day/month/year) | Patent family member(s) | | | Publication date (day/month/year) |
|---|---|---|---|---|---|---|---|
| CN | 114171777 | A | 11 March 2022 | CN | 114171777 | B | 08 July 2022 |
| CN | 101687380 | A | 31 March 2010 | WO | 2009054016 | A2 | 30 April 2009 |
| | | | | BR | PI0818016 | A2 | 14 April 2015 |
| | | | | US | 2010113242 | A1 | 06 May 2010 |
| | | | | ES | 2586419 | T3 | 14 October 2016 |
| | | | | EP | 2200764 | A2 | 30 June 2010 |
| | | | | IT | FI20070230 | A1 | 23 April 2009 |
| | | | | IT | 1377993 | B | 30 July 2010 |
| | | | | CN | 101687380 | B | 07 September 2011 |
| | | | | US | 9068595 | B2 | 30 June 2015 |
| | | | | EP | 2200764 | B1 | 15 June 2016 |
| | | | | BR | PI0818016 | B1 | 17 April 2018 |
| KR | 20100023071 | A | 04 March 2010 | None | | | |
| JP | 2001205325 | A | 31 July 2001 | JP | 3407875 | B2 | 19 May 2003 |
| CN | 103492604 | A | 01 January 2014 | TW | 201309846 | A | 01 March 2013 |
| | | | | US | 2014027216 | A1 | 30 January 2014 |
| | | | | WO | 2012133362 | A1 | 04 October 2012 |
| | | | | KR | 20140010106 | A | 23 January 2014 |
| | | | | JP | 2012207296 | A | 25 October 2012 |
| | | | | JP | 2012207297 | A | 25 October 2012 |
| | | | | VN | 36649 | A | 27 January 2014 |
| | | | | ID | 201402195 | A | 03 July 2014 |
| | | | | JP | 5729087 | B2 | 03 June 2015 |
| | | | | JP | 5736903 | B2 | 17 June 2015 |
| | | | | CN | 103492604 | B | 23 September 2015 |
| | | | | US | 9371884 | B2 | 21 June 2016 |
| | | | | TW | I547593 | B | 01 September 2016 |
| | | | | KR | 101888715 | B1 | 14 August 2018 |
| CN | 108346829 | A | 31 July 2018 | CN | 208127351 | U | 20 November 2018 |

Form PCT/ISA/210 (patent family annex) (January 2015)

**EP 4 415 087 A1**

**REFERENCES CITED IN THE DESCRIPTION**

**Patent documents cited in the description**

- CN 202210136025